# EUROPEAN PATENT SPECIFICATION

(11) **EP 2 089 211 B1**
(45) Date of publication and mention of the grant of the patent: **25.12.2013**
(21) Application number: 07825321.8
(22) Date of filing: 09.10.2007
(51) Int. Cl.: B29C 47/20, B29C 47/88

(54) **METHOD AND APPARATUS OF EXTRUDING MATERIALS HAVING CAPILLARY CHANNELS**
VERFAHREN UND VORRICHTUNG ZUM EXTRUDIEREN VON MATERIALIEN MIT KAPILLARKANÄLEN
PROCÉDÉ ET APPAREIL D'EXTRUSION DE MATIÈRES AYANT DES CANAUX CAPILLAIRES

(30) Priority: 12.10.2006 GB 0620246
(43) Date of publication of application: 19.08.2009
(73) Proprietor: Cambridge Enterprise Limited, Cambridge CB2 1TN (GB)
(72) Inventor: MACKLEY, Malcolm, R., Cambridge CB4 1AP (GB); HALLMARK, Bart, Grundisburgh IP13 6UP (GB)
(74) Representative: Gemmell, Peter Alan
(86) International application number: PCT/IB2007/003010
(87) International publication number: WO 2008/044122

(56) References cited:
- WO-A-2005/056272
- WO-A-2006/016128
- WO-A1-81/02750
- DE-A1- 2 605 481
- JP-A- H1 190 192
- US-A- 3 372 920
- US-A- 4 440 195
- US-A- 5 427 316
- B. HALLMARK ET AL: 'Hollow Microcapillary Arrays in Thin Plastic Films' ADVANCED ENGINEERING MATERIALS vol. 7, no. 6, 01 June 2005, pages 545 - 547, XP055011846 DOI: 10.1002/adem.200400154 ISSN: 1438-1656

## Description

### a. Field of the Invention

The present invention relates to extrusion-processable materials having a plurality of capillary channels therethrough, and to apparatus and methods for manufacturing such materials. The capillaries may be occupied by gases, liquids or other phases. The materials may be anisotropic foams which have high voidage.

### b. Related Art

Conventional polymer foam is usually extrusion processed, for example as described in Tuladhar, T R and Mackley, M R, "Experimental observations and modelling relating to foaming and bubble growth from pentane loaded polystyrene melts", Chemical Engineering Science, vol. 59 (24), 5997-6014, 2004. The resultant product contains a random, isotropic voidage that is inherently difficult to control and predict.

Thermoplastic films or ribbons with anisotropic parallel multiple capillary channels running through them are known as microcapillary films ("MCF"). MCFs and their manufacture are described in WO 2005/056272. MCFs typically have about 5-6% voidage based on optical analysis and the geometry of the die and air entrainment device.

It is desirable to make MCFs having a much higher voidage, to provide anisotropic foam-like structures having parallel channels. Such materials provide interesting mechanical properties and the possibility of new applications. Previous attempts to produce high-voidage MCFs by upstream gas injection have failed because of blistering of the capillaries (Hallmark B, The Development of Microcapillary Films, PhD Thesis, Chapter 3, University of Cambridge, UK, 2005.)

### SUMMARY OF THE INVENTION

According to an aspect of the invention there is provided a method of producing an extrudate product having a plurality of capillary channels therethrough, the method comprising the steps of:
a) providing an extrusion apparatus comprising an extruder having an inlet, a die including an orifice having a predetermined outer shape, a plurality of fluid injectors each having a body including an internal conduit for fluid flow, each injector further comprising an outlet from the internal conduit at an outlet end, the outlet end of each injector being arranged in a predetermined pattern substantially within the orifice of the die, the conduit of each injector being fluidly connected to a fluid source;
b) feeding extrudable material into the extruder through the inlet;
c) forcing the extrudable material towards the die and through the orifice in the die to produce an extrudate having the predetermined outer shape;
d) using the injectors to allow fluid to pass from the fluid source through the conduit to be entrained in the extrudate product to form capillaries such that the extrudate includes fluid-filled capillaries therealong in the predetermined pattern; and characterised by
e) quench cooling of the extrudate as it exits the die.

By quickly quench cooling the extrudate, we have found that stable MCFs with high voidage may be made. Product with voidage up to about 30% can be made using entrainment of air or other fluid at ambient pressure, and we have found that extruded product with voidage in excess of about 30% can readily be produced by injecting pressurised fluid via the injectors. The process overcomes problems of blistering of the capillaries when using a source of pressurised fluid. Using the process we have found that anisotropic thermoplastic foam materials may be controllably formed with voidage up to 60%, and we believe it will be possible to produce anisotropic extrudate product having even higher voidage of up to 80 or 90%.

It will be understood that 'quench cooling of the extrudate as it is exits the die' is to be interpreted practically, as in practice there will always be a finite distance between the die exit and the point at which the extrudate has been sufficiently cooled to resist mechanical deformation. The term 'die exit' means the first location at which the external boundaries of the extrudate are no longer constrained by the die. It is preferred that the cooling is applied to the extrudate less than about 3 mm from the die exit, preferably less than 2 mm, and particularly preferably about 1 mm or less. Thus, it is preferred that the melt drawing length (distance from the die exit to the point of quenching) is as close to zero as practically possible. In this embodiment the quench cooling is provided by one or more fluid jets, notably high speed air jets, which is directed at the extrudate close to the die exit.

In one embodiment of the invention, the fluid source is a regulated, compressed gas supply, notably a pressurised air supply, which can provide a flow of gas under pressure to the fluid injectors. The fluid injectors comprise hollow bodies through which fluid can pass, for example needles. Under conventional MCF extrusion conditions the injectors are passive devices that entrain air naturally at atmospheric pressure. The effect of using pressurised gas is to inflate the capillaries.

The quenched film is typically taken through a pair of nip rollers and then spooled. We have found that the pressure of the nip in this process may be high enough to destroy capillaries formed in a conventional MCF process.

Potential applications for the extrudate product include capillary electrophoresis, for example for DNA analysis, heat transfer, fluid transport, micro-reactor, biomedical applications, liquid encapsulation, optical applications, foodstuffs and porous matrix applications. Such applications are described in WO 2005/056272 and US Serial No. 10/582,465. Other non-limiting examples of applications for the anisotropic foam product include use as food, drug or gas conduits, for example drinking straws, in-body applications, or as pneumatic or hydraulic actuators with 'spark-safe' movement. Further potential applications include remote sensing applications such as conduits for the detection of chemicals, drugs or pollutants, and pressure conduits for measuring pressures at different points in a system or vehicle. The product when used in the applications may have multiple channels or it may be severed to produce a plurality of single channel products.

An important consequence of the ability to fabricate anisotropic foam ribbons is the ability to make an anisotropic foam monolith by heat-melding together a stack of anisotropic foam ribbons. In an alternative embodiment, a two-dimensional array of injectors may be used to create a foam monolith by direct extrusion. Such a material is expected to have unique mechanical properties which can be tailored to suit particular applications.

It is preferred that the die orifice is substantially rectangular so the resulting outer shape of the extrudate product is substantially rectangular. The dimensions of the rectangular orifice are preferably such that the extrudate product is a sheet, film or ribbon Preferably the rectangular orifice has a long side having a length that is at least 5 times longer than the short side. Preferably the ratio is greater than 10 as this may allow the film to flex more readily. It should be understood that the orifice could take other suitable shape, including an annulus. It has been noted that with a non-circular die, for instance a rectangular die there may be edge effects that alter the shape of the capillaries at or near an edge of the film. Such edge effect may be negated through the use of an annular die which is, in effect, a continuous film having no edges. An annular die may allow the production of a tubular extrudate product, for example a cylindrical tube, having greater consistency in the size and shape of the capillaries.

By quench cooling the extrudate as it exits the die, the cross-sectional shape of the extrudate product may be fixed in substantially the same shape as the internal shape of the die orifice. For example, the extrudate product may comprise a tube of circular, oval, square, rectangular, triangular or other polygonal cross-sectional shape, having parallel bores or channels within the wall(s) of the tube.

For simplicity the apparatus will now be described with reference to the preferred embodiment in which the die has a substantially rectangular orifice in which an array of needle outlets are arranged in a line substantially parallel with the long side of the rectangle and substantially in the centre of the short sides of the orifice. This produces an extruded film having a plurality of bores or capillary channels therealong. It should be understood that different arrays and orifice shapes could be employed.

### BRIEF DESCRIPTION OF THE DRAWINGS

The invention will now be further described, by way of example only, with reference to the following drawings in which:
Figure 1 is a schematic diagram of an extrusion apparatus in accordance with an aspect of the present invention;
Figure 2 is a schematic cross section through a first embodiment of the die of Figure 1;
Figure 3 is a schematic view of the die of Figure 1 from below;
Figure 4 is a schematic diagram showing part of the die of a second embodiment of Figure 1 and its injector array;
Figure 5 is a graph of variation in film width and film thickness with haul-off speed;
Figures 6 and 7 show extruded materials produced under various experimental conditions;
Figure 8 is a plan view of part of the apparatus of Figure 1 without air-jet cooling; and
Figure 9 shows part of an experimental set-up in accordance with an embodiment of the invention.

### DETAILED DESCRIPTION

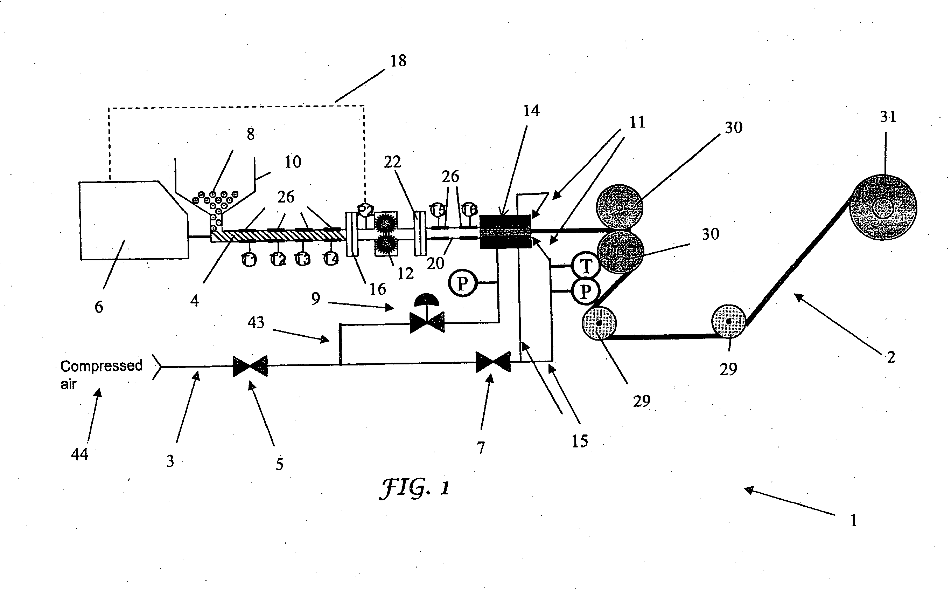

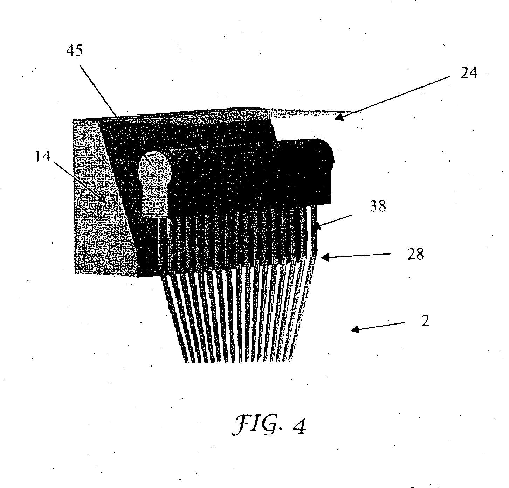

Figure 1 shows extrusion apparatus 1 for creating an extrudate product 2 having capillary channels therealong. The extrusion apparatus comprises screw extruder 4 driven by a motor 6. Extrudable material 8 is fed to the extruder screw 4 through a hopper 10. As the extrudable material passes through the extruder screw 4 the material is melted to form a melt 24 (Figure 4). The extruder screw 4 feeds the melt to a gear pump 12 which maintains a substantially constant flow of melt towards a die 14. The gear pump 12 is connected to the extruder screw 4 by a flange 16 which includes a screen filter to remove impurities from the melt flow. The motor 6 is controlled using a pressure feedback link 18 between the inlet of the gear pump and the motor 6.

The melt 24 passes to the die 14 through an extruder barrel 20 which is connected to the gear pump by a flange 22. Band heaters 26 are used to control the temperature at different stages in the extrusion apparatus 1. Band heaters 26 may be located within the extruder, on the flanges 16,22, on the gear pump 12, on the extruder barrel 20 and also on the die 14. The detail of exemplary embodiments of the die 14 will be shown in greater detail in subsequent figures.

The melt passes through the die 14 and is formed into the desired shape and cross section. As the melt passes out of the die it becomes an extrudate 28 (Figure 4).

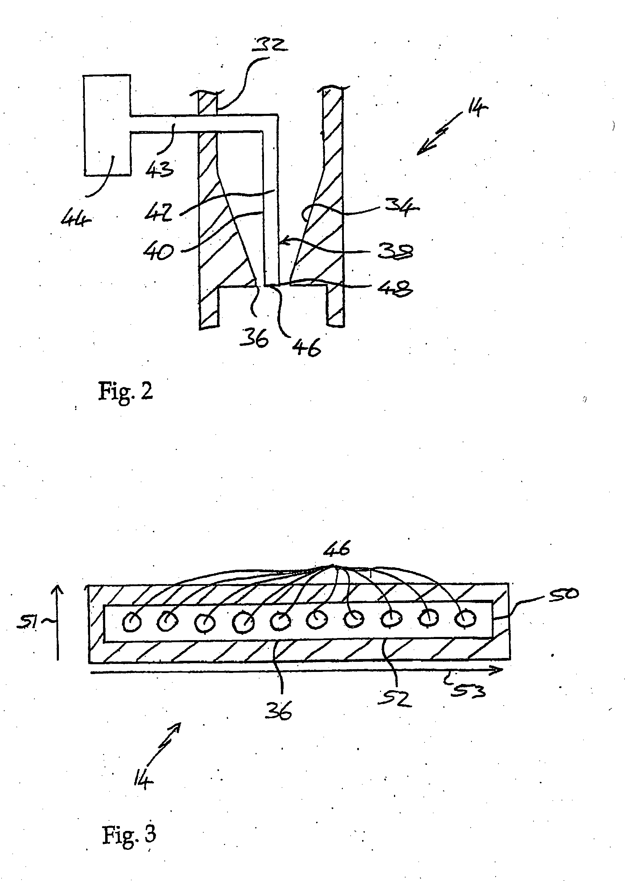

Figure 2 shows a schematic cross section through one embodiment of the die 14 of Figure 1. The die includes an entry portion 32, a convergent portion 34 and an orifice 36 which has a predetermined inner shape. The melt enters the entry portion 32 of the die 14, is gradually shaped by the convergent portion 34 until the melt exits the orifice 36.

The die 14 further includes injectors, which in this example comprise needles 38 (only one of which is shown in this figure) positioned therein. Each needle 38 has a body portion 40 having a conduit 42 therein which is fluidly connected to a fluid source 44 by means of a second conduit 43 passing through a wall of the die 14 around which the melt must flow to pass to the orifice 36. The needle 38 further includes an outlet 46 at an end 48 of the needle 38. The needle 38 is arranged such that the outlet 46 is located within the orifice 36. In this embodiment, the fluid source 44 is a source of compressed air. However other fluid sources may be used. The fluid source could for example comprise a different compressed gas, a liquid, sol or suspension, or the fluid source 44 could be open to atmosphere to allow ambient air to be entrained.

Figure 3 shows a schematic view of the die 14 from below. The orifice 36 has a rectangular outer shape, a short side 50 substantially parallel with a short axis 51 and a long side 52 substantially parallel with a long axis 53. The die 14 is designed such that the incoming flow, which is contained in a circular pipe, is altered such that it may pass through the orifice 36 of the die 14. The die 14 must effect this geometry change, and this is currently achieved by using a convergent die 14.

The die 14 is also designed so that the flow over the array of needles 38 is substantially even. An even melt flow around the needles 38 facilitates creation of well-formed extrudate 28. If, however, there is an uneven flow, the melt will preferentially channel along a path of least resistance. This results in a distorted extrudate 28, which can also results in inconsistent draw down distortions.

In this example, the die includes ten needles 38 with the outlets 46 distributed substantially evenly along the long axis 53 within the orifice and substantially centrally in the orifice along the short axis 51. In this example, the die orifice has a short side dimension of 1.5 mm, a long side dimension of 18 mm and the needles have a 0.5 mm outer diameter and a 0.3 mm inner bore.

In this example, compressed air from the fluid source 44 is provided to the second conduit 43 via a supply conduit 3 with a manually-controlled isolation valve 5. The second conduit 43 has a mass flow control valve which can be used to regulate the volume of gas passing through the needles 38. A pressure sensor P is used to measure the pressure of gas to the needles 38.

The supply conduit 3 is fluidly connected to air jet lines 15 via a manually-controlled needle valve 7. The air jet lines 15 are arranged to direct jets of high-speed air via air-jet nozzles 11 to extrudate 28 as it exits the die orifice 36, thereby rapidly quenching the extrudate 28 to form the extrudate product 2. A temperature sensor T and a pressure sensor P can be used to measure temperature and pressure of the air jet lines 15.

In the embodiment of die 14 shown in Figure 4, the second conduit 43 is connected to the injectors 38 via a plenum 45 located within the die 14. The end of each injector 38 is located substantially level with the die orifice so as to minimise the distance between extrudate 28 passing beyond the injectors 38 and being quench cooled by the air jets. This die arrangement (with 19 injectors) was used in the experimental work described below.

The web of quenched extrudate product 2 is held by a pair of nip rollers 30, which can be pressurised so as to get a firm grip. This permits the nip rollers 30 to maintain a good hauling tension. Because the nip rollers 30 are not handling readily-deformable extrudate 28, they may use pressures much higher than in a conventional MCF process. The nip rollers 30 may be chilled, but this is not essential since rapid air-quenching has taken place close to the die exit. After passing through the nip rollers 30 the extrudate product is wound on to a spool 31, in this example via one or more guide rollers 29, either or any of which may optionally by heated.

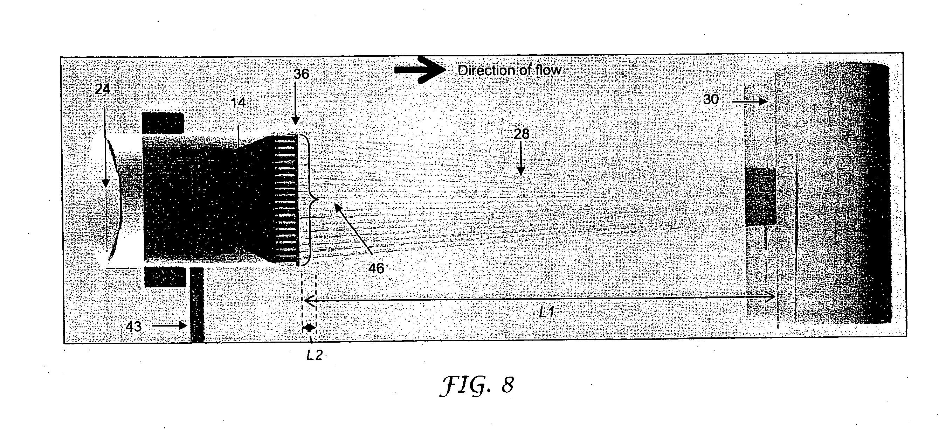

A key difference between the process of the present invention and prior art MCF processes is illustrated in Figure 8, where the plastic extrudate 28 is shown in the absence of air jet cooling, being quenched at chilled nip rollers 30. The film width is reduced, and the voidage is relatively low, typically about 5-6%. If attempts are made to increase the voidage by injected pressurised gas through the injectors 38, blistering of the extrudate occurs. The melt drawing length L1 (the distance from the die exit to quenching of the extrudate) is typically up to about 15 cm. In the method of the present invention, the extrudate is quench cooled as quickly as is practical after it leaves the die exit. The melt drawing length L2 is preferably less than 3 mm, notably 2 mm or less. It is particularly preferred that the melt drawing length is less than about 1 mm. It will be understood that the illustrated distances L1 and L2 are by way of contrasting example only and that Figure 8 is not necessarily to scale.

The process enables the controlled production of high-voidage extrudate products, including novel anisotropic foam materials.

### EXPERIMENTAL RESULTS

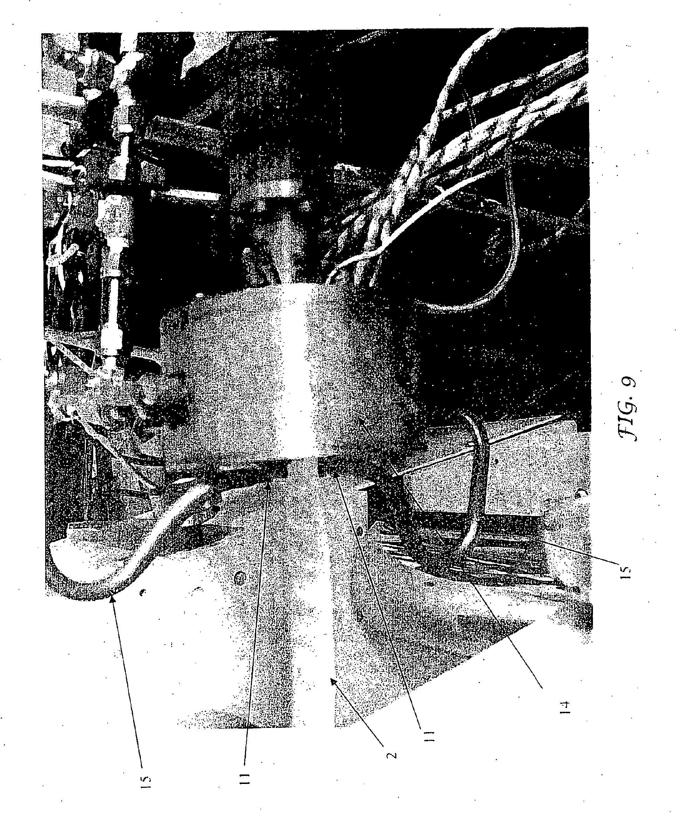

The apparatus of Figure 1 was used to prepare MCFs having high voidage. The high-voidage process preserves all the equipment used for making prior art MCFs, such as described in WO 2005/056272, but adds on two additional items. Firstly, a high-speed air quench in the form of two opposing air jets were added immediately at the die exit, and secondly a regulated gas supply was attached to the array of injectors such that a highly controlled gas supply could be introduced into the polymer within the die. The air for both of these operations was supplied from a compressed air main at roughly 6.5 barg. The pressure and temperature of the gas going to the air-quench was monitored, as was the volumetric flow and pressure of the gas entering the injectors. The experimental die 14, air jet lines 15 and air jet nozzles 11 are shown in Figure 9.

Experiments were carried out using a commercial grade of linear low-density polyethylene (LLDPE NG5056G) manufactured by the Dow Chemical Company Inc. Prior to starting experimental work, the extruder was heated to 175°C and extrusion line (the remaining ancillary pipe-work, pumps and die) to 165°C. Once at these temperatures, the extruder was set to run at a volumetric flow-rate of approximately 2x10⁻⁷ m³/s. This corresponded to a die exit velocity of roughly 7mm/s.

At all times during the experiments, the high-speed gas flow was used to quench the polymer at the moment it exited the extrusion die. The two gas quenching nozzles 11 were situated 10 mm above and below the die exit, lined up on the die exit's centreline. These quenching jets are visible in Figure 9. The pressure and temperature of the gas was measured just prior to exiting the jets; these measurements could be used with in conjunction with knowledge of the stagnation conditions of the gas supply to calculate the gas velocity near the quench tube exit. During the course of the experiments, the velocity of the gas exiting the quench jets was of the order of 50 m/s. Typically the stagnation temperature and pressure were about 25°C and 6.3 barg respectively. Typical flow conditions were around 22°C and 0.4 barg.

Seven sets of experiments were carried out to determine the effects of specific process parameters on the product voidage; these parameters were the die temperature, hauling speed and gas flow to the injectors. The details of each set of experiments are given in Table 1.

Depending on the stability of the product, around 6 to 8 product samples were taken for each set of experiments at differing increments of the process parameter under investigation.

Each sample was then sectioned with a razor blade, exposing the capillary structure, and viewed using a CCD camera with a high-magnification lens. The images of each cross section were captured on a PC and then analysed to give an estimate of the voidage present within the film.

**Table 1**

| **Experiment** | **Description** |
|---|---|
| A | Die temperature 165°C, haul off constant at 0.5 m/min, looking at effect of increasing injector gas flow on product stability and morphology. Gas flow rate range between 0 cm³/min and 600 cm³/min. |
| B | Die temperature 165°C, natural gas entrainment (conventional MCF process conditions with the inclusion of gas quench). Looking at effect of increasing haul off speed on product stability and morphology. Haul off speeds between 0.5 m/min and 0.9 m/min. |
| C | Repeat experiment B |
| D | Die temperature 185°C, natural gas entrainment (conventional MCF process conditions with the inclusion of gas quench). Looking at effect of increasing haul off speed on product stability and morphology. Haul off speeds between 0.8 m/min to 1.8 m/min. |
| E | Die temperature 185°C, injector gas flow set to 220 cm³/min. Looking at effect of increasing haul off speed on product stability and morphology. Haul off speeds between 0.8 m/min to 1.8 m/min. |
| F | Die temperature 185°C, injector gas flow set to 370 cm³/min. Looking at effect of increasing haul off speed on product stability and morphology. Haul off speeds between 0.8 m/min to 1.8 m/min. |
| G | Die temperature 215°C, natural gas entrainment (conventional MCF process conditions with the inclusion of gas quench). Looking at effect of increasing haul off speed on product stability and morphology. Haul off speeds between 1.8 m/min to 15.2 m/min. |

### Results and discussion

### Experiment A

The effect of increasing the gas flow to the injectors 38 had two effects on the extruded product 2. Firstly, between gas flows of 0 cm³/min (natural entrainment) and about 300 cm³/min the process was stable, producing products of increasing voidage. These results are summarised in Table 2.

**Table 2 - Effect of gas flow on voidage and process stability.**

| Experiment | Injector gas flow (cm³/min) | Injector gas pressure (barg) | Voidage (%) | Notes |
|---|---|---|---|---|
| A1 | 0 | 0 | 15 | Stable process |
| A2 | 210 | 0 | 20 | Stable process |
| A3 | 340 | 0.03 (fluctuating) | 22 (when stable) | Quasi stable. |
| A4 | 450 - 500 | 0.11 to 0.19 | | Unstable |
| A5 | 340 - 360 | 0.08 to 0.14 | | Unstable |
| A6 | 200 | 0.07 | | Unstable |
| A7 | 500 | 0 | | Stable |
| A8 | 580 | 0.04 | | Unstable |

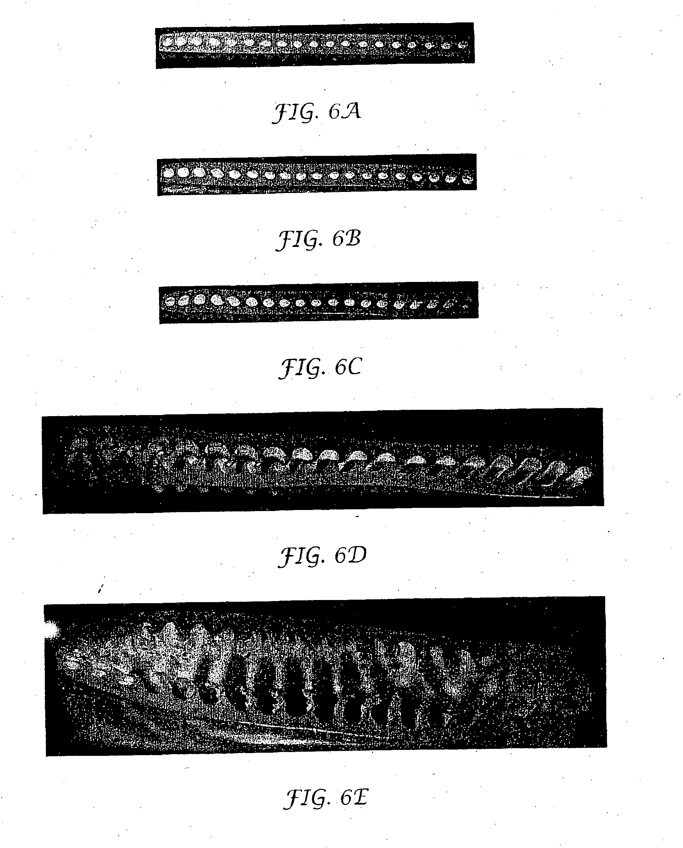

Photographs of sections of the extrudate product 2 for Experiments A1-A3 are shown in Figures 6A-6C respectively.

If the flow-rate had been incrementally increased from zero, the process went from being stable to unstable at flow-rates above 340 cm³/min. The instability manifested itself in the form of internal rupture of the product, shown in Figure 6E, and also as fluctuations in the gas flow rate. Figure 6E is taken from Experiment A4. Here, the inter-capillary walls have yielded to produce essentially a hollow tube with longitudinal corrugations around its perimeter and along its length. The width of the film is approximately 18 mm. In addition, it was interesting to note that when the process was observed to be stable, the measured gas pressure into the gas injectors was zero, but when the process was observed to be unstable a positive pressure varying (typically) between 10 and 150 millibar was measured.
At the transition between the stable and unstable state, a variety of interesting cross sections could be formed; one such cross-section is shown in Figure 6D, from Experiment A6. This photograph was taken near the transition of instability and rupture of the extrudate product.

It was found, however, that flow-rates between 340 cm³/min and 500 cm³/min could be stably sustained (on occasion) if they were imposed rapidly from a zero flow rate. It is thus preferred to take the process from zero flow rate to the intended maximum flow rate as quickly as possible, notably in less than 5 seconds, preferably in 2 seconds or less. For a 19 capillary product, the preferred flow rate is therefore in the range 0 to about 26 cm³/min (500/19).

### Experiments B and C

The effect of increasing the haul-off speed on the product was seen qualitatively to increase the voidage within the product. Quantitative measurements are not presented here since the haul roller pressure was too great for the films and consequently some of the capillaries had been significantly reduced in size hence invalidating comparative voidage measurements.

Several other phenomena, however, were noticed during the course of these experiments. The first was that increasing the haul-off speed did not have a strong effect on the external dimensions of the product. Usually, increasing the hauling rate reduces the dimensions of the film as it is drawn in its molten state between the die exit and the quenching roller. Due to the immediate quench at the die exit, however, this melt drawing did not occur in the same manner. The net effect of increasing the haul-off speed is thought to increase the drawing force of the polymer at the die exit.

It was noticed, however, that the pressure of the polymer melt (measured significantly upstream of the extrusion die), was affected by the haul off speed, such that increasing the drawing speed decreased the melt pressure. This effect has not been previously observed with the conventional MCF process. Without wishing to be bound by theory, a possible explanation for this effect is that the rapid gas quench causes a large temperature gradient in the polymer at the die exit, resulting in locally higher polymer viscosity in this region when compared to the viscosity of the polymer within the extrusion line. Increasing the haul-off speed, therefore, has the net effect of being able to forcibly remove more material from the die exit region, resulting in an acceleration of the polymer within the extrusion die. Typically, the majority of the pressure drop within the extrusion line occurs around the region of the die exit, so if material is being removed from this area by a means other than the pressure within the extrusion line, then the measured pressure within the extrusion line will fall.

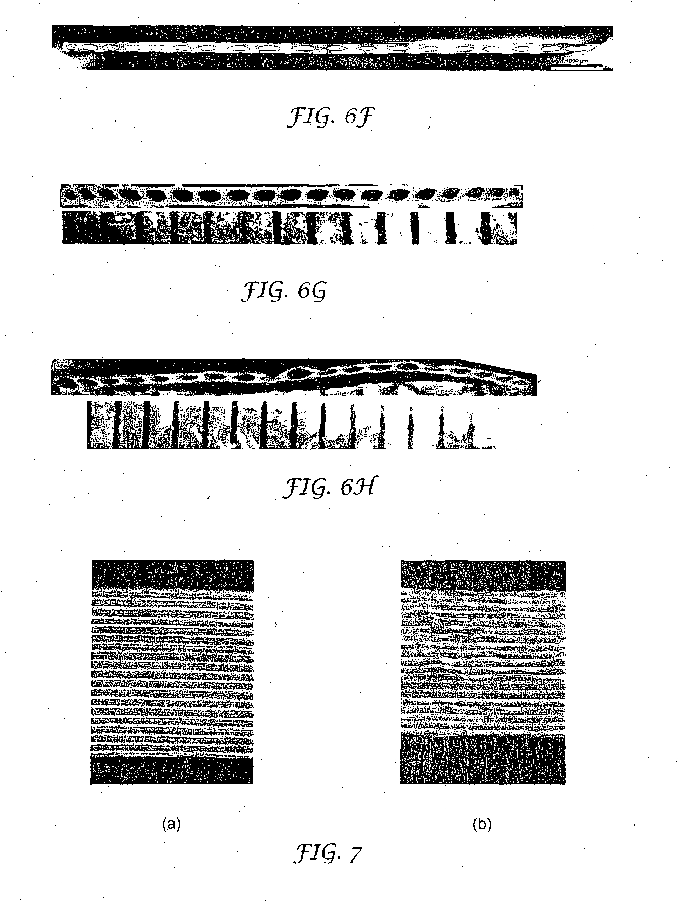

A further observation was with regard to product quality in relation to haul-off speed. At low haul-off speeds (0.5 m/min), a high-quality finish was achieved on the polymer. At higher hauling speeds (around 0.8 m/min), however, the quality of the finish became very rough and 'ragged'. This effect is illustrated in Figure 7, in which the product from the low haul-off speed process is shown on the left (a) and the product from the higher haul-off speed process is shown on the right (b). The die exit temperature was 165°C. The width of the film in each picture is approximately 18 mm.

### Experiments D, E and F.

These experiments explored the effect of haul-off speed and injector gas flow on the final product. For these three experiments, the die exit temperature was raised by 20°C to 185°C. The purpose of this was to delay the onset of the 'ragged' type of product illustrated in Figure 7(b); this was successful and the quality of the product at 0.8 m/min was akin to that shown in Figure 7(a) with 'raggedness' only appearing at haul-off speeds around 1.1 m/min with severe raggedness akin to that shown in Figure 7(b) occurring around 1.8 m/min.

The effect of both increasing injector gas flow and increasing haul-off speed was to increase the voidage in the final product. This is summarised in Table 3.

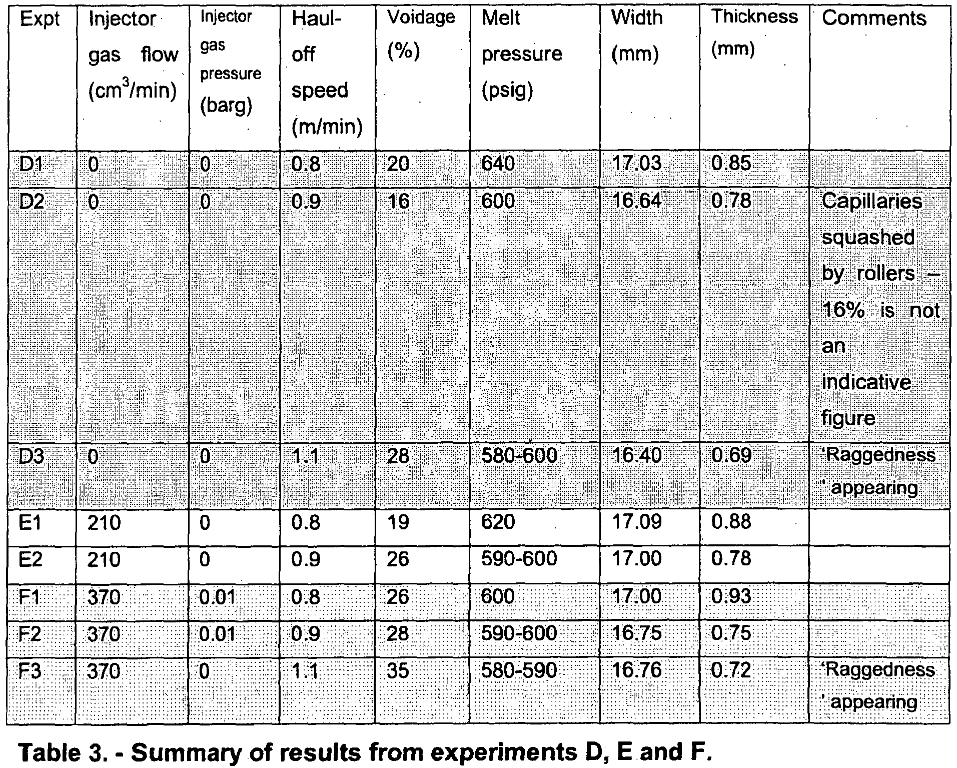

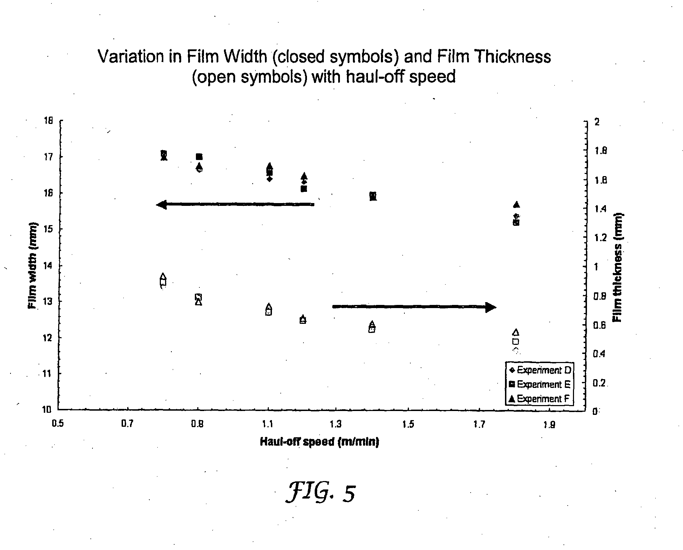

In addition to the increasing voidage, as a function of both gas flow and haul-off speed, some other interesting observations can be made from these data. Firstly, the process remained stable throughout in relation to maintaining un-ruptured capillaries. Secondly, it can be seen from the data in the table that increasing haul-off speed decreased the extrusion pressure, as observed in experiments B and C. Lastly, again similar to experiments B and C, increasing haul-off speed only had a minor effect on the external dimensions of the films. A plot showing the variation in film width and film thickness with haul-off speed is shown in Figure 5.

### Experiment G

The final experiment examined the effect of haul-off speed on voidage and product quality at an elevated die temperature of 215°C. This was carried out under conditions of natural air entrainment through the injectors 38.

As expected from previous results, it was found that increasing haul-off speed increased the amount of voidage present within the film; two examples are given in Table 4.

**Table 4- Selected results from experiment G.**

| Experiment | Haul-off speed (m/min) | Voidage (%) | Comments |
|---|---|---|---|
| G1 | 1.8 | 14 | Smooth, defect-free product |
| G5 | 7.6 | 27 | Smooth, defect-free product |

The most striking observation from this set of experiments, however, concerned the stability of the process in terms of draw resonance.

Draw resonance is an instability found in fibre-spinning and film-casting processes. If we define a 'draw-ratio' as the ratio of (mean) velocities between the polymer coming out of the die and the velocity with which it is hauled away, post quench, in its solid state, then we can see that this quantity related to the amount of drawdown the polymer experiences in its molten state.

If one attempts to try and draw the polymer excessively, then the 'draw-resonance' instability appears. It takes the form of periodic oscillations in the width and thickness of the film. The period of the oscillation is linked to the quenching distance (distance between die exit and quench) and the amplitude linked to the draw ratio. It can be proved mathematically that, for a Newtonian fluid, draw resonance will appear at a draw ratio of 20.2. The are various ways in which viscoelasticity, fast quenching, and other methods can be combined to slightly delay the onset of this instability. In general, however, it represents the upper production limit on the film casting/fibre spinning system.

At no point was draw resonance observed. At the highest haul-off speed attainable with the existing machinery (15.2 m/min), the process was stable. It was, however, observed that due to the cooling effect of the quenching jets, the velocity of the polymer exiting the die appeared to be substantially similar to that of the haul-off speed. It furthermore appeared that the polymer was being forcibly pulled out of the extrusion die exit, with a consequent acceleration of the polymer within the extrusion die and drop in pressure in the extrusion line.

The elevated die temperature eliminated any observable form of product 'raggedness' that has previously been discussed. Furthermore, due to the lower viscosity of the polymer within the die, there was some drawing effect in terms of the external dimensions of the film diminishing with increasing hauling speed; this effect was still significantly weaker when compared to similar effects in the conventional MCF process.

**Table 5 - Variation of width and thickness of product with haul-off speed obtained in experiment G.**

| Experiment | Haul-off speed (m/min) | Extrudate width (mm) | Extrudate thickness (mm) |
|---|---|---|---|
| G1 | 1.8 | 13.24 | 0.51 |
| G2 | 3.0 | 11.65 | 0.34 |
| G3 | 4.6 | 11.54 | 0.28 |
| G4 | 6.1 | 10.67 | 0.19 |
| G5 | 7.6 | 10.03 | 0.17 |
| G6 | 9.1 | 10.22 | 0.15 |
| G7 | 10.6 | 9.6 | 0.10 |

A photograph of the cross section of the film from experiment G5 also demonstrates the higher haul-off speeds being used resulted in a shape- and size-range of capillaries; this is shown in Figure 6F. The width of the film is approximately 10 mm.

Some experimental work carried out using a polyolefin plastomer (Dow Affinity 1880) has suggested that variation of the process parameters outlined using LLDPE have similar effects. A key difference is that is appears to be easier to produce higher voidages but also easier to induce the rupturing instability that was shown in Figure 6E. Typically, successful extrusion of a high voidage product was achieved stably with injector gas flows around 90 cm³/min, but with instability observed with injector gas flows in excess of about 100 cm³/min to 150 cm³/min.

Figures 6G and 6H show extrudate products produced using the Dow Affinity 1880 plastomer, extruded at a die temperature of 175°C and a steady gas flow rate of 80 cm³/min. A scale with mm gradations is placed alongside each film. The product shown in Figure 6G has approximately 40% voidage and was produced with a lower haul-off speed (around 0.8 m/min or higher) and the product shown in Figure 6H has approximately 60% voidage and was produced with higher haul-off speeds in the range of about 1-3 m/min.

Applications for these new high-voidage products, including anisotropic foams, include novel conduits for foods, drugs or gas, such as drinking straws, which may have multiple capillaries. A particularly useful feature is their ability to sustain curvature in one direction without collapse of hollow capillaries.

There are a number of factors that influence the voidage of the final product. These can be summarised as follows:
- Increasing the haul-off speed will increase the voidage of the final product,
- Increasing the injector gas flow-rate will increase the voidage of the final product,
- Increasing the injector gas flow-rate above a critical threshold will result in product instability and rupture of the inter-capillary walls,
- The critical threshold at which product instability and rupture takes places can be inferred from the gas injection pressure. In the stable state, this is zero (within the bounds of equipment sensitivity, or less than 10 millibar). The unstable state was observed with gas injection pressures in excess of around 40 millibar, and this pressure was usually fluctuating,
- The product containing the ruptured inter-capillary walls is effectively a pipe with internal wall corrugations running along its length.

In the sets of experiments with LLDPE, voidages between 17% and up to around 35% were observed. In experiments with Affinity plastomer, voidages up to 60% were observed. Successful experiments have also been carried out with an extrusion grade of poly(vinyl alcohol) (PVA) (Depart PVA C10-40).

In addition to these observations, some unusual process characteristics also emerged. These can be summarised as follows:
- Increasing haul-off speed only has a small effect on the product width and thickness,
- A 'high' haul-off speed for 'moderate' die temperatures (165°C to 185°C) can lead to a ragged product,
- A 'high' haul-off speed for 'high' die temperatures (215°C) is attainable without draw-resonance instability,
- Increasing haul-off speed tends to decrease the polymer pressure within the extrusion line.

By adjusting the process conditions, an extrudate product can be formed with a high degree of voidage. The voidage may be filled by a second phase such as air, or by any other type of phase. The surface area to volume ratio can be 'tuned' for specific applications, and a product can be made which is tough and can take tensile loading, and which will bear a curvature without fracturing which would damage a single-bore tube.

The articles 'a', 'an' and 'the' are used herein to denote 'at least one' unless the context otherwise requires.

## Claims

1. A method of producing an extrudate film product having a plurality of capillary channels therethrough, the method comprising the steps of:
a) providing an extrusion apparatus comprising an extruder having an inlet, a die including an orifice having a predetermined outer shape, a plurality of fluid injectors each having a body including an internal conduit for fluid flow, each injector further comprising an outlet from the internal conduit at an outlet end, the outlet end of each injector being arranged in a predetermined pattern substantially within the orifice of the die, the conduit of each injector being fluidly connected to a fluid source;
b) feeding extrudable material into the extruder through the inlet;
c) forcing the extrudable material towards the die and through the orifice in the die to produce an extrudate film having the predetermined outer shape;
d) using the injectors to allow fluid to pass from the fluid source through the conduit to be entrained in the extrudate film product to form capillaries such that the extrudate film includes fluid-filled capillaries therealong in the predetermined pattern; and **characterised by**
e) quench cooling of the extrudate film as it exits the die by applying at least one jet of pressurised fluid to the extrudate film at a location within 3 mm of the die orifice.

2. A method according to claim 1, wherein the quench cooling is achieved by applying jets of pressurised air to the extrudate film.

3. A method according to claim 1 or claim 2, wherein the or each jet is applied to extrudate at a location within 2 mm of the die orifice.

4. A method according to any preceding claim, wherein the fluid source is a source of pressurised fluid.

5. A method according to claim 4, wherein the pressurised fluid is compressed air.

6. A method according to claim 4 or claim 5, wherein the pressurised fluid is injected at a rate in the range 0-26 cm³/min per injector.

7. A method according to claim 4 or claim 5, wherein the pressured fluid is injected at a rate in the range 11-16 cm³/min per injector.

8. A method according to any of claims 4-7, wherein the pressurised fluid is provided at a measured gauge pressure in the range 0-150 millibar.

9. A method according to claim 8, wherein the pressurised fluid is provided at a measured gauge pressure in the range 0-10 millibar.

10. A method according to any preceding claim, further comprising using nip rollers to pull the extrudate product through at a haul-off speed in the range 0.8-15 m/min.

11. Apparatus for producing an extrudate film product including a plurality of capillary channels therethrough, the apparatus comprising an extruder having an inlet, a die including an orifice having a predetermined outer shape, a plurality of injectors each having a body including an internal conduit for fluid flow, each injector further comprising an outlet from the internal conduit at an outlet end, the outlet end of each injector being arranged in a predetermined pattern substantially within the orifice of the die, the conduit of each orifice being fluidly connected to a fluid source, wherein, in use:
a) extrudable material is fed into the extruder through the inlet;
b) the extruder forces the extrudable material around the bodies of the injectors towards the die and through the orifice in the die to produce an extrudate film having the predetermined outer shape;
c) the injectors allow fluid to pass from the fluid source through the conduit to be entrained in the extrudate product to form capillaries such that the extrudate film product includes capillaries therealong in the predetermined pattern; and **characterised by**
d) means for quench cooling of the extrudate film as it exits the die, said means comprising at least one nozzle arranged when in use to provide a jet of pressurised fluid directed to impinge on the extrudate film within 3 mm of the die orifice.

12. Apparatus according to claim 11, wherein the injectors comprise needles.

13. Apparatus according to claim 11 or claim 12, wherein the fluid source is a source of pressurised fluid.

14. Apparatus according to any of claims 11-13, wherein the fluid source is a source of compressed air.

15. Apparatus according to any of claims 11-14, wherein the at least one nozzle is arranged when in use to provide a jet of pressurised fluid directed to impinge on the extrudate film within less than 2 mm of the die orifice.

## Patentansprüche

1. Ein Verfahren zur Herstellung eines extrudierten Filmproduktes mit einer Vielzahl von Kapillarkanälen, wobei das Verfahren die Schritte umfasst:
a) Bereitstellen eines Extrusionsapparates umfassend einen Extruder mit einem Eingang, eine Matrize enthaltend eine Blende mit einer vorbestimmten äußeren Form, eine Vielzahl von Flüssigkeitsinjektoren, wobei jeder einen Körper enthaltend eine innere Leitung für einen Flüssigkeitsfluss aufweist, wobei jeder Injektor des Weiteren einen Ausgang von der inneren Leitung an einem Ausgangsende umfasst, wobei das Ausgangsende von jedem Injektor in einen vorbestimmten Muster im Wesentlichen innerhalb der Blende der Matrize angeordnet ist, wobei die Leitung von jedem Injektor in flüssigem Kontakt mit einer Flüssigkeitsquelle steht;
b) Einführen von extrudierbarem Material in den Extruder durch den Einlass;
c) Drücken des extrudierbaren Materials hin zur Matrize und durch die Blende in der Matrize, um einen extrudierten Film mit der vorbestimmten äußeren Form herzustellen;
d) Verwenden der Injektoren, um es der Flüssigkeit zu ermöglichen, von der Flüssigkeitsquelle durch die Leitung geführt zu werden, um von dem extrudierten Filmprodukt zur Ausbildung der Kapillaren eingeschlossen zu werden, so dass der extrudierte Film flüssigkeitsgefüllte Kapillaren in dem vorbestimmten Muster enthält; und **gekennzeichnet durch**
e) eine Quenchkühlung des extrudierten Filmes, wenn dieser die Matrize verlässt, **durch** Anwenden von mindestens einem Strahl von unter Druck befindlichem Fluid auf den extrudierten Film in einer Position innerhalb von 3 mm von der Matrizenblende.

2. Verfahren gemäß Anspruch 1, wobei das Quenchkühlen durch die Anwendung von Strahlen von sich unter Druck befindlicher Luft auf den extrudierten Film bewirkt wird.

3. Verfahren gemäß Anspruch 1 oder 2, wobei der oder jeder Strahl auf das Extrudat an einer Position innerhalb von 2 mm von der Matrizenblende angewendet wird.

4. Verfahren gemäß einem der vorhergehenden Ansprüche, wobei die Fluidquelle eine Quelle von unter Druck befindlichem Fluid ist.

5. Verfahren gemäß Anspruch 4, wobei das sich unter Druck befindliche Fluid komprimierte Luft ist.

6. Verfahren gemäß Anspruch 4 oder 5, wobei das unter Druck befindliche Fluid mit einer Rate im Bereich von 0 bis 26 cm³/min pro Injektor injiziert wird.

7. Verfahren gemäß Anspruch 4 oder 5, wobei das sich unter Druck befindliche Fluid in mit einer Rate im Bereich von 11 bis 16 cm³/min pro Injektor injiziert wird.

8. Verfahren gemäß einem der Ansprüche 4 bis 7, wobei das unter Druck befindliche Fluid bei einem gemessenen Manometerdruck im Bereich von 0 bis 150 mbar bereitgestellt wird.

9. Verfahren gemäß Anspruch 8, wobei das unter Druck befindliche Fluid bei einem gemessenen Manometerdruck in dem Bereich von 0 bis 10 mbar bereitgestellt wird.

10. Verfahren gemäß einem der vorgehenden Ansprüche, des Weiteren umfassend die Verwendung von Quetschwalzen, um das extrudierte Produkt mit einer Abzugsgeschwindigkeit im Bereich von 0,8 bis 15 m/Minute durchzuziehen.

11. Vorrichtung zur Herstellung eines extrudierten Filmproduktes enthaltend eine Vielzahl von Kapillarkanälen, wobei die Vorrichtung einen Extruder mit einem Einlass umfasst, eine Matrize enthaltend eine Blende mit einer vorbestimmten äußeren Form, eine Vielzahl von Injektoren, wobei jeder einen Körper enthaltend eine innere Leitung für ein Fluidfluss aufweist, wobei jeder Injektor des Weiteren einen Auslass von der inneren Leitung an einem Auslassende umfasst, wobei das Auslassende von jedem Injektor in einem vorbestimmten Muster im Wesentlichen innerhalb der Blende der Matrize angeordnet ist, wobei die Leitung von jeder Blende in flüssiger Verbindung mit einer Fluidquelle steht, wobei bei Verwendung:
a) extrudierbares Material in den Extruder durch den Einlass eingeführt wird;
b) der Extruder das extrudierbare Material um die Körper der Injektoren in Richtung der Matrize und durch die Blenden in der Matrize zwingt, um einen extrudierten Film mit der vorbestimmten äußeren Form herzustellen;
c) die Injektoren es dem Fluid ermöglichen, von der Fluidquelle durch die Leitung zu gelangen, um in dem extrudierten Produkt zur Ausbildung von Kapillaren eingeschlossen zu werden, so dass das extrudierte Filmprodukt Kapillaren in dem vorbestimmten Muster enthält; und **gekennzeichnet durch**
d) Mittel zur Quenchkühlung des extrudierten Films, wenn dieser die Matrize verlässt, wobei die Mittel mindestens eine Düse umfassen, die bei Verwendung angeordnet ist, um einen Strahl von unter Druck befindlichem Fluid bereitzustellen, der so gerichtet ist, um den extrudierten Film innerhalb von 3 mm der Matrizendüse aufzutreffen.

12. Vorrichtung gemäß Anspruch 11, wobei die Injektoren Nadeln umfassen.

13. Vorrichtung gemäß Anspruch 11 oder 12, wobei die Fluidquelle eine Quelle von unter Druck befindlichem Fluid ist.

14. Vorrichtung gemäß einem der Ansprüche 11 bis 13, wobei die Fluidquelle eine Quelle von unter Druck befindlicher Luft ist.

15. Vorrichtung gemäß einem der Ansprüche 11 bis 14, wobei die mindestens eine Düse bei Anwendung angeordnet ist, um einen Strahl von unter Druck befindlichem Fluid direkt auszurichten, um auf den extrudierten Film innerhalb von weniger als 2 mm von der Matrizenblende aufzutreffen.

## Revendications

1. Procédé de production d'un produit de film extrudé traversé par une pluralité de canaux capillaires, le procédé comprenant les étapes consistant à :
a) fournir un appareil d'extrusion comprenant une extrudeuse ayant une admission, une filière incluant un orifice ayant une forme externe prédéterminée, une pluralité d'injecteurs de fluide ayant chacun un corps incluant un conduit interne pour l'écoulement de fluide, chaque injecteur comprenant en outre un refoulement depuis le conduit interne au niveau d'une extrémité de refoulement, l'extrémité de refoulement de chaque injecteur étant agencée en un motif prédéterminé sensiblement à l'intérieur de l'orifice de la filière, le conduit de chaque injecteur étant raccordé fluidiquement à une source de fluide ;
b) alimenter l'extrudeuse en matériau extrudable à travers l'admission ;
c) forcer le matériau extrudable vers la filière et à travers l'orifice dans la filière pour produire un film extrudé ayant la forme externe prédéterminée ;
d) utiliser les injecteurs pour permettre au fluide de passer depuis la source de fluide à travers le conduit pour être entraîné dans le produit de film extrudé pour former des capillaires de sorte que le film extrudé inclue des capillaires remplis de fluide le long de ceux-ci dans le motif prédéterminé ; et **caractérisé par**
e) le refroidissement par trempe du film extrudé lorsqu'il sort de la filière en appliquant au moins un jet de fluide sous pression au film extrudé en un emplacement à 3 mm au plus de l'orifice de la filière.

2. Procédé selon la revendication 1, dans lequel le refroidissement par trempe est réalisé en appliquant des jets d'air sous pression au film extrudé.

3. Procédé selon la revendication 1 ou la revendication 2, dans lequel le ou chaque jet est appliqué à l'extrudat en un emplacement à 2 mm au plus de l'orifice de la filière.

4. Procédé selon une quelconque revendication précédente, dans lequel la source de fluide est une source de fluide sous pression.

5. Procédé selon la revendication 4, dans lequel le fluide sous pression est de l'air comprimé.

6. Procédé selon la revendication 4 ou la revendication 5, dans lequel le fluide sous pression est injecté à un débit dans la plage de 0 à 26 cm³/min par injecteur.

7. Procédé selon la revendication 4 ou la revendication 5, dans lequel le fluide sous pression est injecté à un débit dans la plage de 11 à 16 cm³/min par injecteur.

8. Procédé selon l'une quelconque des revendications 4 à 7, dans lequel le fluide sous pression est fourni à une pression manométrique mesurée dans la plage de 0 à 150 millibars.

9. Procédé selon la revendication 8, dans lequel le fluide sous pression est fourni à une pression manométrique mesurée dans la plage de 0 à 10 millibars.

10. Procédé selon une quelconque revendication précédente, comprenant en outre l'utilisation de rouleaux pinceurs pour faire traverser le produit extrudé en le tirant à une vitesse d'étirage dans la plage de 0,8 à 15 m/min.

11. Appareil de production d'un produit de film extrudé traversé par une pluralité de canaux capillaires, l'appareil comprenant une extrudeuse ayant une admission, une filière incluant un orifice ayant une forme externe prédéterminée, une pluralité d'injecteurs ayant chacun un corps incluant un conduit interne pour l'écoulement de fluide, chaque injecteur comprenant en outre un refoulement depuis le conduit interne au niveau d'une extrémité de refoulement, l'extrémité de refoulement de chaque injecteur étant agencée en un motif prédéterminé sensiblement à l'intérieur de l'orifice de la filière, le conduit de chaque orifice étant raccordé fluidiquement à une source de fluide, dans lequel, en utilisation :
a) l'extrudeuse est alimentée en matériau extrudable à travers l'admission ;
b) l'extrudeuse force le matériau extrudable autour des corps des injecteurs vers la filière et à travers l'orifice dans la filière pour produire un film extrudé ayant la forme externe prédéterminée ;
c) les injecteurs permettent au fluide de passer depuis la source de fluide à travers le conduit pour être entraîné dans le produit extrudé pour former des capillaires de sorte que le produit de film extrudé inclue des capillaires le long de ceux-ci dans le motif prédéterminé ; et **caractérisé par**
d) un moyen de refroidissement par trempe du film extrudé lorsqu'il sort de la filière, ledit moyen comprenant au moins une buse agencée pour fournir, en utilisation, un jet de fluide sous pression dirigé pour toucher le film extrudé à 3 mm au plus de l'orifice de la filière.

12. Appareil selon la revendication 11, dans lequel les injecteurs comprennent des aiguilles.

13. Appareil selon la revendication 11 ou la revendication 12, dans lequel la source de fluide est une source de fluide sous pression.

14. Appareil selon l'une quelconque des revendications 11 à 13, dans lequel la source de fluide est une source d'air comprimé.

15. Appareil selon l'une quelconque des revendications 11 à 14, dans lequel l'au moins une buse est agencée, en utilisation, pour fournir un jet de fluide sous pression dirigé pour toucher le film extrudé à moins de 2 mm de l'orifice de la filière.
